# EUROPEAN PATENT SPECIFICATION

(11) **EP 2 420 699 B1**
(45) Date of publication and mention of the grant of the patent: **12.06.2019**
(21) Application number: 10764232.4
(22) Date of filing: 07.04.2010
(51) Int. Cl.: F16F 13/10, B60K 5/12, F16F 13/06, F16F 13/18

(54) **LIQUID-SEALED VIBRATION-ISOLATING DEVICE**
FLÜSSIGKEITSVERSIEGELTE VIBRATIONSISOLATIONSVORRICHTUNG
DISPOSITIF ANTI-VIBRATION SCELLÉ DE FAÇON ÉTANCHE VIS-À-VIS DES LIQUIDES

(30) Priority: 13.04.2009 JP 2009097284
(43) Date of publication of application: 22.02.2012
(73) Proprietor: Toyo Tire Corporation, Itami-shi, Hyogo 664-0847 (JP)
(72) Inventor: OGASAWARA, Dai, Osaka-shi Osaka 550-0002 (JP)
(74) Representative: Strehl Schübel-Hopf & Partner
(86) International application number: PCT/JP2010/002552
(87) International publication number: WO 2010/119645

(56) References cited:
- EP-A1- 0 725 227
- EP-A1- 1 923 598
- EP-A2- 0 042 910
- GB-A- 2 237 354
- GB-A- 2 332 498
- JP-A- 2003 074 617
- JP-A- 2008 164 102
- JP-A- 2008 196 705
- JP-A- 2009 002 433
- JP-A- 2009 002 433

## Description

### TECHNICAL FIELD

The present invention relates to a liquid-sealed antivibration device.

### BACKGROUND ART

A liquid-sealed antivibration device includes, in general, a first mounting member, a second mounting member having a cylindrical shape, a vibration-isolating base body which connects the first mounting member and the second mounting member and is made of a rubbery elastic material, a diaphragm which is mounted on the second mounting member so as to form a liquid sealed chamber between the diaphragm and the vibration-isolating base body and is formed of a rubber film, a partition element which partitions the liquid sealed chamber into a first liquid chamber on a vibration-isolating base body side and a second liquid chamber on a diaphragm side, and an orifice flow passage which allows the first liquid chamber and the second liquid chamber to be communicated with each other.

As such a liquid-sealed antivibration device, the following patent document 1 proposes an idea where a partition element by which a first liquid chamber and a second liquid chamber are separated from each other has the following constitution. That is, the partition element includes an annular orifice forming member, an elastic wall made of a rubbery elastic material which blocks a space formed by an inner peripheral surfaces, and a pair of partition plates which is connected to each other via a connecting portion penetrating the elastic wall and sandwiches the elastic wall in the axial direction. Here, the displacement of the pair of partition plates in the axial direction is restricted by the elastic wall.

In such a liquid-sealed antivibration device, the displacement of the pair of partition plates is restricted by the elastic wall. Accordingly, while damping vibrations by making use of a liquid flow effect generated by an orifice flow passage with respect to large amplitude vibrations in a low frequency range, vibrations can be reduced by making use of the reduction of a dynamic spring constant generated by the reciprocating movement of the partition plates with respect to minute amplitude vibrations in a high frequency range. Patent document 1: JP-A-2009-002433 Further, EP 1923598 A1 discloses an antivibration device from which the pre-characterising part of the independent claims starts out. Related art is disclosed in GB 2237354 A.

### SUMMARY OF THE INVENTION

### PROBLEMS TO BE SOLVED BY THE INVENTION

As described above, with the provision of the constitution disclosed in patent document 1, it is possible to realize lowering of the dynamic spring constant with respect to minute amplitude vibrations in the high frequency range while sufficiently securing damping with respect to large amplitude vibrations in the low frequency range. However, there has been a demand for further lowing of dynamic spring constant at the time of minute amplitude vibrations. It is difficult for the constitution disclosed in patent document 1 to sufficiently satisfy the above-mentioned request while securing the high damping performance at the time of large amplitude vibrations.

The invention has been made in view of the above-mentioned drawbacks, and it is an object of the invention to provide a liquid-sealed antivibration device which can realize further lowering of dynamic spring constant at the time of minute amplitude vibrations while securing high damping performance at the time of large amplitude vibrations.

### MEANS FOR SOLVING THE PROBLEMS

The invention solves the above object by an antivibration device as set forth in the appended claims. Representative features of such device and their technical effects are as follows:
a first mounting member, a second mounting member having a cylindrical shape; a vibration-isolating base body which connects the first mounting member and the second mounting member and is made of a rubbery elastic material; a diaphragm formed of a rubbery elastic film to be mounted on the second mounting member so as to form a liquid sealed chamber between the diaphragm and the vibration-isolating base body; a partition element which partitions the liquid sealed chamber into a first liquid chamber on a vibration-isolating base body side and a second liquid chamber on a diaphragm side; and an orifice flow passage which allows the first liquid chamber and the second liquid chamber to be communicated with each other, wherein the partition element includes: an annular orifice forming member which is mounted on an inner side of a peripheral wall portion of the second mounting member and forms the orifice flow passage; an elastic wall which blocks a space formed within an inner peripheral surface of the orifice forming member and is made of a rubbery elastic material; and a pair of partition plates which is connected to each other via a connecting portion which penetrates a radially central portion of the elastic wall, and sandwiches the elastic wall in the axial direction of the elastic wall.

According to a first feature, a through hole which penetrates at least one of the partition plates in the axial direction is formed on a radially outer side of the connecting portion.

Further, according to a second feature, a recessed portion is formed at least one of front and back wall surfaces of the elastic wall, and a groove which extends in the radial direction for connecting the recessed portion with the first liquid chamber or the second liquid chamber on a radially outer side of the recessed portion is formed on a plate surface of the partition plate or a wall surface of the elastic wall, and the inside of the recessed portion and the first liquid chamber or the second liquid chamber are connected with each other by way of a gap formed by the groove between the plate surface of the partition plate and the wall surface of the elastic wall in a state where a liquid is allowed to flow between the recessed portion and the first liquid chamber or the second liquid chamber.

### ADVANTAGES OF THE INVENTION

In the liquid-sealed antivibration device according to the invention, with respect to large amplitude vibrations in a low frequency range, the displacement of the pair of partition plates is restricted by the elastic wall and hence, high damping performance can be secured due to a liquid flow effect generated by the orifice flow passage. With respect to minute amplitude vibrations in a high frequency range, the pair of partition plates reciprocates and hence, a dynamic spring constant is lowered whereby vibrations can be reduced.

According to the above-mentioned first feature when minute amplitude vibrations are inputted, the partition plate is vibrated with minute amplitude and hence, liquid flow is generated in the inside of the through hole which is formed in the partition plate and penetrates the partition plate in the axial direction whereby the through hole can be operated as a high frequency orifice flow passage. Accordingly, liquid resonance can be generated at a specific frequency range thus lowering the dynamic spring constant in the frequency range.

Further, according to the above-mentioned second feature at the time of minute amplitude vibrations, the gap formed by the groove formed in the partition plate or the elastic wall can be operated as a high frequency orifice flow passage. Accordingly, in the same manner as the first mode, liquid resonance can be generated at a specific frequency range and hence, a dynamic spring constant in the frequency range can be reduced. Also in this mode, at the time of large amplitude vibrations, the partition plate is displaced in the axial direction and hence, the gap can be blocked by the partition plate whereby it is advantageous for securing a high damping performance originally acquired by the orifice flow passage.

As described above, according to the invention, it is possible to acquire the further lowering of a dynamic spring constant at the time of minute amplitude vibrations while securing the high damping performance at the time of large amplitude vibrations.

### BRIEF DESCRIPTION OF THE DRAWINGS

Fig. 1 is a longitudinal cross-sectional view of a liquid-sealed antivibration device according to a first embodiment.
Fig. 2 is a longitudinal cross-sectional view of a partition element of the antivibration device (cross-section taken along a line II-II in Fig. 7).
Fig. 3 is an exploded longitudinal cross-sectional view of the partition element (a cross section taken along a line III-III in Fig. 8).
Fig. 4 is a longitudinal cross-sectional view of a pair of partition plates which constitutes the partition element in a connected state.
Fig. 5 is a longitudinal cross-sectional view showing an essential part of the partition element showing the structure of the partition plate around a through hole in an enlarged manner.
Fig. 6 is a longitudinal cross-sectional view showing an essential part of the partition element showing the structure of an elastic wall around a high rigidity portion in an enlarged manner.
Fig. 7 is a bottom view of the partition element.
Fig. 8 is a plan view of the partition plate which constitutes the partition element.
Fig. 9 is a longitudinal cross-sectional view of a partition element according to a second embodiment (cross-section taken along a line IX-IX in Fig. 12).
Fig. 10 is an exploded longitudinal cross-sectional view of the partition element of the second embodiment (a cross section taken along a line X-X in Fig. 13).
Fig. 11 is a longitudinal cross-sectional view showing an essential part of the partition element of the second embodiment in an enlarged manner.
Fig. 12 is a bottom view of the partition element of the second embodiment.
Fig. 13 is a plan view of the partition plate which constitutes the partition element of the second embodiment.
Fig. 14 is a longitudinal cross-sectional view of a partition element according to a third embodiment.
Fig. 15 is a longitudinal cross-sectional view of an orifice forming member and an elastic wall which constitute the partition element of the third embodiment.
Fig. 16 is a longitudinal cross-sectional view showing an essential part of the partition element of the third embodiment in an enlarged manner.
Fig. 17 is a bottom view of the orifice forming member and the elastic wall of the third embodiment.

### DESCRIPTION OF REFERENCE NUMERALS AND SIGNS

| | | | |
|---|---|---|---|
| 10: liquid-sealed antivibration device | 12: first mounting member | | |
| 14: second mounting member | 14A: peripheral wall portion | | |
| 16: vibration-isolating base body | 36: liquid sealed chamber | | |
| 36A: first liquid chamber | 36B: second liquid chamber | | |
| 38: diaphragm | 40: partition element | 42: orifice flow passage | |
| 44: orifice forming member | 44A: inner peripheral surface of orifice forming member | | |
| 46: elastic wall 48, | 50: partition plate | 56: connecting portion | |
| 60: sandwiching portion | 64: first sandwiching portion | | |
| 66: second sandwiching portion | 68: high compression sandwiching portion | | |
| 74: recessed portion | 76: low rigidity portion | 78: high rigidity portion | |
| 80: through hole | 100: partition element | 102: groove | |
| 104: gap | 110: groove | 112: gap | C: circumferential direction |
| K: radial direction | Ko: radially outer side | Ki: radially inner side | |
| X: axial direction | | | |

### MODE FOR CARRYING OUT THE INVENTION

A liquid-sealed antivibration device according to embodiments of the invention is explained in conjunction with drawings.

### (First embodiment)

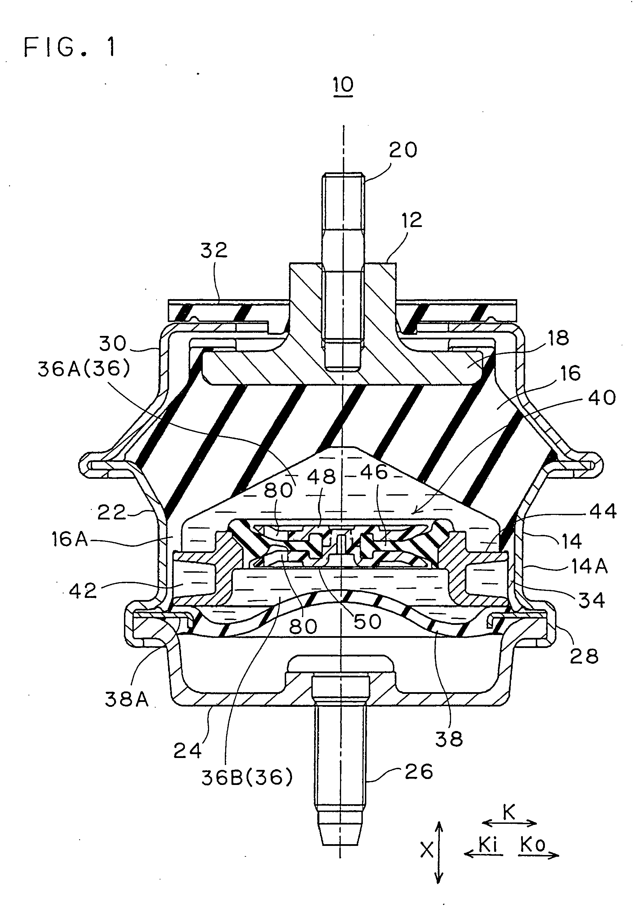

Fig. 1 is a longitudinal cross-sectional view of a liquid-sealed antivibration device 10 according to the first embodiment The antivibration device 10 is an engine mount which includes an upper-side first mounting member 12 to be mounted on an engine of an automobile, a lower-side second mounting member 14 having a cylindrical shape to be mounted on a vehicle body frame, and a vibration-isolating base body 16 made of a rubber-like elastic material which connects these mounting members to each other.

The first mounting member 12 is a boss fitting arranged at an upper portion of the second mounting member 14 along an axis of the second mounting member 14, and includes a stopper part 18 which projects in the radial direction (that is, the axial perpendicular direction which is perpendicular to the axial direction X) K toward an outer side Ko in a flange shape. Further, a mounting bolt 20 is formed on an upper end portion of the first mounting member 12 in an upwardly projecting manner, and the first mounting member 12 is configured to be mounted on an engine side by means of the bolt 20.

The second mounting member 14 is constituted of a circular cylindrical fitting 22 on which the vibration-isolating base body 16 is formed by vulcanization and a cup-shaped bottom fitting 24, wherein a mounting bolt 26 which extends downward is mounted on a center portion of the bottom fitting 24 in a projecting manner, and the second mounting member 14 is configured to be mounted on a vehicle body side by means of the bolt 26. A lower end portion of the cylindrical fitting 22 is caulked and fixed to an upper end opening portion of the bottom fitting 24 by a caulking part 28. Symbol 30 indicates a stopper fitting which is caulked and fixed to an upper end portion of the cylindrical fitting 22, and exhibits a stopper action between the stopper part 18 of the first mounting member 12 and the stopper fitting 30. Symbol 32 indicates a stopper rubber which covers an upper surface of the stopper fitting 30.

The vibration-isolating base body 16 is formed into a frustum-conical shape, wherein an upper end portion of the vibration-isolating base body 16 is adhered to the first mounting member 12 by vulcanization and a lower end portion of the vibration-isolating base body 16 is adhered to an upper end opening portion of the cylindrical fitting 22 by vulcanization. A rubber-film-like seal wall portion 34 which covers an inner peripheral surface of the cylindrical fitting 22 is contiguously formed with the lower end portion of the vibration-isolating base body 16.

A diaphragm 38 which is formed of a flexible rubber film is arranged on the second mounting member 14 such that the diaphragm 38 faces a lower surface of the vibration-isolating base body 16 in an opposed manner in the axial direction X thus defining a liquid-sealed chamber 36 between the diaphragm 38 and the lower surface of the vibration-isolating base body 16. A liquid is sealed in the liquid-sealed chamber 36. By a partition element 40, the liquid sealed chamber 36 is partitioned into a first liquid chamber 36A on a vibration-isolating base body 16 side and a second liquid chamber 36B on a diaphragm 38 side. The first liquid chamber 36A and the second liquid chamber 36B are communicated with each other through an orifice flow passage 42 which constitutes a throttle flow passage. The first liquid chamber 36A is a main liquid chamber where the vibration-isolating base body 16 forms a part of a chamber wall, and the second liquid chamber 36B is a subsidiary liquid chamber where the diaphragm 38 constitutes a part of a chamber wall.

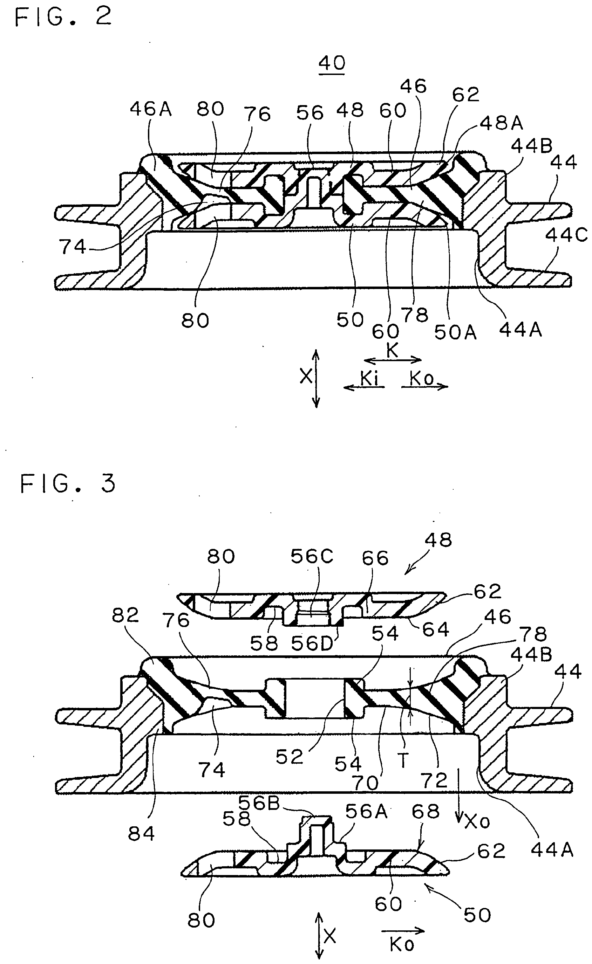

The partition element 40 is, as shown in Fig. 1 and Fig. 2, constituted of a circular annular orifice forming member 44 which is mounted on an inner side of a cylindrical peripheral wall portion 14A of the second mounting member 14, an elastic wall 46 formed of a rubber elastic body which has an outer peripheral portion 46A thereof adhered to an inner peripheral surface 44A of the orifice forming member 44 by vulcanization thus blocking a space formed within the inner peripheral surface 44A, and a pair of upper and lower partition plates 48, 50 which sandwiches the elastic wall 46 in the axial direction X.

The orifice forming member 44 is a member made of a rigid material and forms an orifice flow passage 42 extending in the circumferential direction between the orifice forming member 44 and the peripheral wall portion 14A of the second mounting member 14. The orifice forming member 44 is fitted in a seal wall portion 34 which forms an inner periphery of the peripheral wall portion 14A. To be more specific, the orifice forming member 44 includes a cylindrical part 44B arranged coaxially with the peripheral wall portion 14A of the second mounting member 14, and a recessed groove portion 44C which has a U-shaped cross-section and opens outward on an outer peripheral side of the cylindrical part 44B. An inner peripheral surface of the cylindrical part 44B forms the above-mentioned inner peripheral surface 44A. Further, the above-mentioned orifice flow passage 42 is formed between the recessed groove portion 44C and the peripheral wall portion 14A of the second mounting member 14.

The orifice forming member 44 is sandwiched and fixed by a reinforcing fitting 38A embedded in an outer peripheral portion of the diaphragm 38 and a stopper stepped portion 16A formed on an outer peripheral portion of a lower end of the vibration-isolating base body 16. To be more specific, the reinforcing fitting 38A mounted on the outer peripheral portion of the diaphragm 38 is caulked and fixed by the caulking portion 28 of the second mounting member 14, and a lower end portion of the orifice forming member 44 is supported by the reinforcing fitting 38A via a rubber portion of the diaphragm 38 which covers an inner peripheral portion of the reinforcing fitting 38A.

The above-mentioned elastic wall 46 has a circular shape as viewed in a plan view and, as shown in Fig. 3, the outer peripheral portion 46A of the elastic wall 46 is adhered to the inner peripheral surface 44A of the cylindrical part 44B of the orifice forming member 44 by vulcanization. The elastic wall 46 includes a circular connection hole 52 which penetrates a radially central portion of the elastic wall 46 in the axial direction X, and an annular projecting ridge 54 which projects in the axial direction X is formed on both front and back sides of the elastic wall 46 around the connection hole 52.

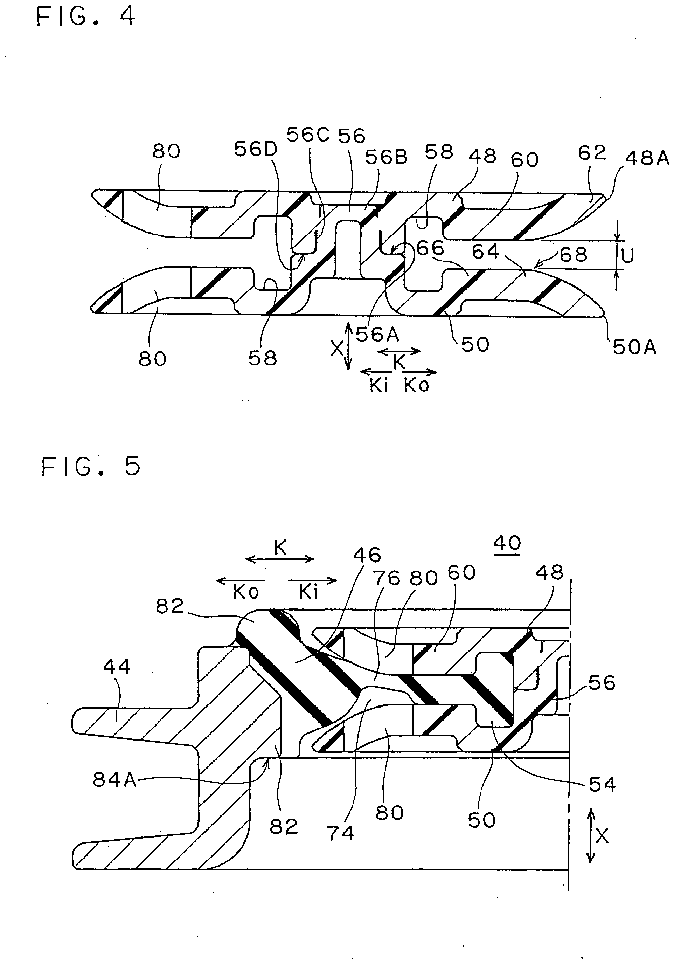

The pair of partition plates 48, 50 is connected to each other by way of a columnar connecting portion 56 which passes through the connection hole 52 as shown in Fig. 2 and Fig. 4 and are integrally formed using a thermoplastic resin. Out of the pair of partition plates 48, 50, one (upper-side) partition plate 48 constitutes a part of the chamber wall of the first liquid chamber 36A. That is, the partition plate 48 is arranged to face the first liquid chamber 36A in an opposed manner (see Fig. 1). On the other hand, the other (lower-side) partition plate 50 constitutes a part of the chamber wall of the second liquid chamber 36B. That is, the partition plate 50 is arranged to face the second liquid chamber 36B in an opposed manner. The displacement of the pair of partition plates 48, 50 in the axial direction X is restricted by the elastic wall 46.

The pair of partition plates 48, 50 is formed with a profile smaller than a profile of the elastic wall 46 as viewed in a plan view. That is, outer peripheries 48A, 50A of the partition plates 48, 50 terminate on a more radially inner Ki side than the inner peripheral surface 44A of the orifice forming member 44 where an outer periphery of the elastic wall 46 is positioned (see Fig. 2).

As shown in Fig. 3, the connecting portion 56 includes a ring-shaped first planar portion 56A which is formed on the lower-side partition plate 50 and is perpendicular to the axial direction X, a fitting projecting portion 56B which projects from the first planar portion 56A in the axial direction X, a fitting recessed portion 56C which is formed on the upper-side partition plate 48 and in which the fitting protecting portion 56B is fitted, and a ring-shaped second planar portion 56D which is formed on an opening peripheral portion of the fitting recessed portion 56C and is perpendicular to the axial direction X. As shown in Fig. 4, the fitting projecting portion 56B and the fitting recessed portion 56C are fitted and fixed to each other by ultrasonic welding in a state where the first planar portion 56A and the second planar portion 56D are positioned in the axial direction X by being contact with each other.

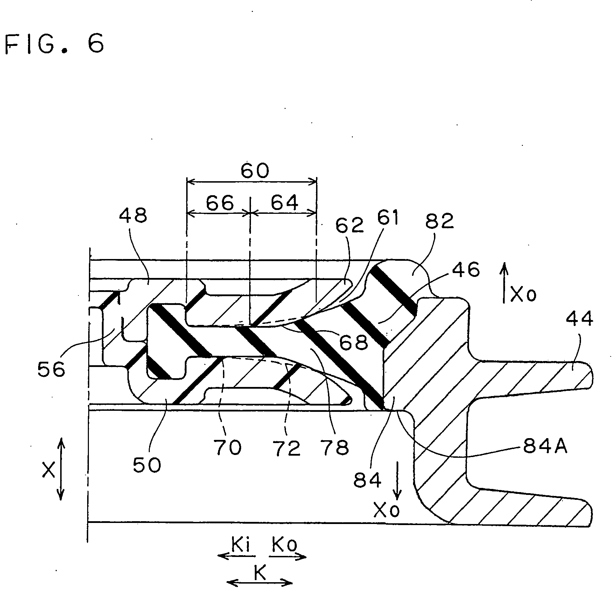

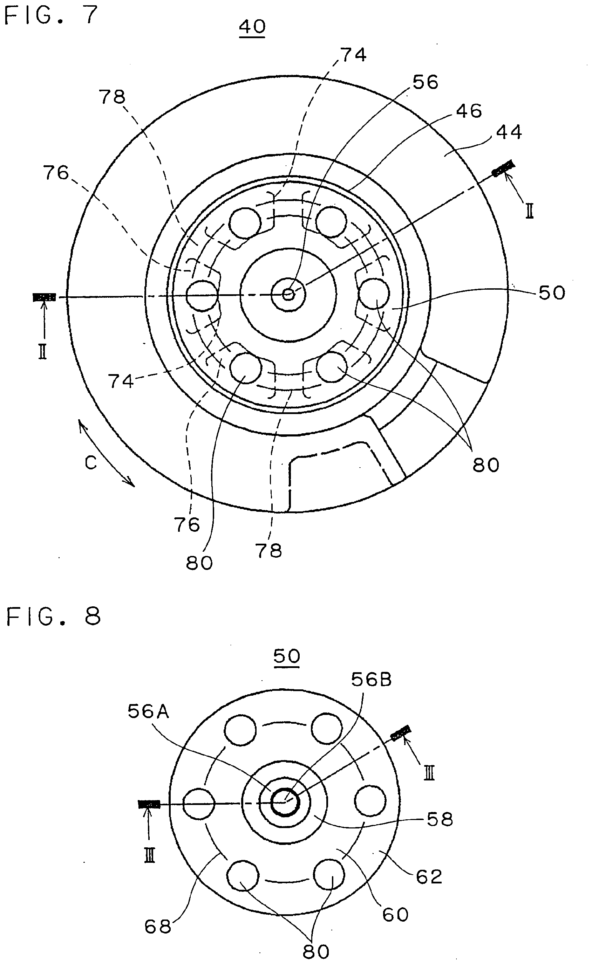

Annular grooves 58 in which the upper and lower projection ridges 54 of the elastic wall 46 are fitted respectively are formed on the pair of partition plates 48, 50 around the connecting portion 56 arranged at the center portion of the partition plates 48, 50 (see Fig. 3, Fig. 8). On outer peripheries of the annular grooves 58, that is, on a radially outer Ko side of the annular grooves 58, sandwiching portions 60 which sandwich the elastic wall 46 in the axial direction X are formed annularly over the whole circumference. Further, on outer peripheries of the sandwiching portions 60, that is, on a radially outer Ko side of the sandwiching portions 60, a clearance forming portion 62 which forms a clearance 61 with a wall surface of the elastic wall 46 opposed to the clearance forming portion 62 is formed (see Fig. 6). The clearance 61 is gradually widened toward the radially outer Ko side. The clearance forming portions 62 constitute outer peripheral edge portions of the partition plates 48, 50 respectively.

As shown in Fig. 6, with respect to the above-mentioned sandwiching portion 60, by setting a radially intermediate position as a boundary, assume a radially outer Ko side arranged outside the boundary, that is, an outer peripheral side as a first sandwiching portion 64, and assume a radially inner Ki side arranged inside the boundary, that is, an inner peripheral side as a second sandwiching portion 66. Here, a high compression sandwiching portion 68 which sandwiches the elastic wall 46 with a higher compression rate in the axial direction X than the second sandwiching portion 66 is formed in the first sandwiching portion 64. That is, the sandwiching portion 60 includes the high compression sandwiching portion 68 where a compression rate of the elastic wall 46 in the axial direction X is set to the highest value at the first sandwiching portion 64 on the outer peripheral side of the sandwiching portion 60, and the compression rate at the high compression sandwiching portion 68 is set higher than a compression rate on the radially inner Ki side of the high compression sandwiching portion 68 and a compression rate on the radially outer Ko side of the high compression sandwiching portion 68.

Here, the compression rate of the elastic wall 46 in the axial direction X is a value which is obtained by dividing a compression amount of the elastic wall 46 in the axial direction X generated by the pair of partition plates 48, 50 by an original thickness of the elastic wall 46, and is defined by (T-U)/T where U is a distance between the pair of partition plates 48, 50 at a portion which becomes a subject (see Fig. 4) and T is an original thickness of the elastic wall 46 at the portion (see Fig. 3). Further, the compression rate of the high compression sandwiching portion 68 is set to a high level such that even when the estimated maximum displacement of the partition plates 48, 50 in the axial direction X occurs, the high compression sandwiching portion 68 is not separated from the wall surface of the elastic wall 46, that is, the compression remains.

To be more specific, in this embodiment, as shown in Fig. 6, in the second sandwiching portion 66 on the inner peripheral side, the compression rate of the elastic wall 46 in the axial direction X is set to an approximately fixed value. Further, in the first sandwiching portion 64 on the outer peripheral side, the compression rate is gradually increased toward the radially outer Ko side. The compression rate becomes maximum at the above-mentioned high compression sandwiching portion 68. The compression rate is gradually lowered toward the radially outer Ko side from the high compression sandwiching portion 68, and the clearance forming portion 62 for forming the clearance 61 is provided as a succeeding portion.

For setting such a compression rate, cross-sectional shapes of the pair of partition plates 48, 50 and the elastic wall 46 are formed as follows respectively. The partition plates 48, 50 are formed into a planar shape perpendicular to the axial direction X so as to have a constant a distance U from the second sandwiching portion 66 to the high compression sandwiching portion 68 of the first sandwiching portion 64 in the radial direction K. On an outer peripheral side with respect to the high compression sandwiching portion 68, the partition plates 48, 50 are formed into an inclined surface shape gradually inclined axially outward Xo as it goes radially outward Ko (see Fig. 4 and Fig. 6). On the other hand, with respect to the elastic wall 46, a wall surface 70 which opposedly faces the second sandwiching portion 66 is formed into a planar shape perpendicular to the axial direction X, and a portion on an outer peripheral side from the wall surface 70, that is, a wall surface 72 which opposedly faces the first sandwiching portion 64 and a portion of the partition plate on a radially outer Ko side from the first sandwiching portion 64 (that is, the clearance forming portion 62) is formed into an inclined surface shape so as to be inclined axially outward Xo as it goes radially outward Ko (see Fig. 3 and Fig. 6). Accordingly, the elastic wall 46 is formed such that the outer peripheral portion 46A has a large wall thickness. Both the inclined surfaces of the partition plates 48, 50 on the outer peripheral side from the high compression sandwiching portion 68 and the inclined surface of the wall surface 72 of the elastic wall 46 are formed into a curved shape, and a gradient of the former is set larger than a gradient of the latter. Due to such a constitution, the clearance 61 is gradually widened in the direction toward the radially outer Ko side.

As shown in Fig. 3, with respect to an elastic wall portion of the elastic wall 46 which is sandwiched by the above-mentioned high compression sandwiching portions 68, a recessed portion 74 which is indented in the axial direction X is formed on a wall surface of the elastic wall portion. In this embodiment, the recessed portion 74 is formed on the wall surface which faces a second liquid chamber 36B side (the wall surface on a lower side). As shown in Fig. 7, a plurality of (6 in this embodiment) recessed portions 74 are provided in the circumferential direction C at equal intervals. Accordingly, low rigidity portions 76 having a small wall thickness are intermittently formed in the circumferential direction C on the elastic wall portion sandwiched by the high compression sandwiching portions 68.

The recessed portions 74 are, in this embodiment, approximately formed over the whole portion of the elastic wall 46 which faces the first sandwiching portion 64 in an opposed manner in the radial direction K. Further, as shown in Fig. 7, the recessed portions 74 are formed in an arcuate shape, and a high rigidity portion 78 having an inclined surface shape where a wall thickness is gradually increased toward a radially outer Ko side is radially formed between the respective recessed portions 74 such that the elastic wall portion on an inner peripheral side of the recessed portions 74 and the elastic wall portion on an outer peripheral side of the recessed portions 74 are gently connected to each other. Due to such high rigidity portions 78, the partition plate 50 and the elastic wall 46 are brought into contact with each other at the high compression sandwiching portion 68.

As shown in Fig. 2, in the sandwiching portions 60 of the pair of partition plates 48, 50 which sandwich the elastic wall 46 on the radially outer Ko side of the above-mentioned connecting portion 56, through holes 80 which penetrate the sandwiching portions 60 in the axial direction X are provided. As shown in Fig. 8, the through hole 80 has a circular shape as viewed in a plan view. Plural (6 in this embodiment) through holes 80 are provided in the circumferential direction C at equal intervals.

As shown in Fig. 7, the through holes 80 are provided at positions where the through holes 80 overlap with the recessed portions 74 formed on the elastic wall 46 in the axial direction X. That is, in this embodiment, as viewed in Fig. 7 which is a plan view, the through hole 80 is formed so as to fall within a range of the low rigidity portion 76 formed by the recessed portion 74. The through holes 80 are formed at positions where the through holes 80 overlap with the plural respective recessed portions 74 in the axial direction X on a one to one basis. Also in this embodiment, the through holes 80 are formed in the upper and lower partition plates 48, 50 respectively such that the through holes 80 overlap with each other in the axial direction X. To explain in more detail, the plural through holes 80 formed in the upper partition plate 48 and the plural through holes 80 formed in the lower partition plate 50 are formed such that their shapes, sizes and positions are made to agree with each other. As described above, according to this embodiment, as shown in Fig. 5, the through holes 80 formed in the lower partition plate 50 are formed so as to open in the recessed portions 74, and the through holes 80 formed in the upper partition element 48 are formed so as to come into contact with a surface of the low rigidity portions 76 on a back side of the recessed portion 74.

Symbol 82 indicates a raised portion formed on the outer peripheral portion 46A of the elastic wall 46 (see Fig. 6), and on a first liquid chamber 36A side of the elastic wall 46, the raised portion 82 is formed by raising on an axially outer Xo side with respect to the wall surface 72 having an inclined surface shape, that is, toward a first liquid chamber 36A side. The raised portion 82 is formed such that the raised portion 82 projects toward the axially outer Xo side from an upper surface of the partition plate 48 on the first liquid chamber 36A side.

Further, symbol 84 indicates a projecting portion which is formed on the inner peripheral surface 44A of the orifice forming member 44, and the projecting portion 84 is formed in a projecting manner toward a radially inner Ki side at a root portion of the elastic wall 46 on a second liquid chamber 36B side. A side surface 84A of the projecting portion 84 on a second liquid chamber 36B side is formed into a planar shape perpendicular to the axial direction X of the elastic wall 46, and the side surface 84A is used as a surface with which a forming mold is brought into pressure contact at the time of molding the elastic wall 46 (seal surface for preventing the occurrence of burrs).

Due to the provision of the raised portion 82 and the projecting portion 84, the rigidity of the root portion of the elastic wall 46 with respect to the orifice forming member 44 can be increased so that an effect of restricting the displacement of the pair of partition plates 48, 50 at the time of low-frequency large amplitude vibrations can be enhanced.

According to the liquid-sealed antivibration device 10 of this embodiment having the above-mentioned constitution, when minute amplitude vibrations in a high frequency range are generated, the pair of partition plates 48, 50 reciprocates integrally and hence, a liquid pressure in the first liquid chamber 36A can be absorbed whereby the vibrations can be reduced. Accordingly, a dynamic spring constant can be effectively reduced with respect to high-frequency minute amplitude vibrations. On the other hand, when large amplitude vibrations in a low frequency range are generated, the displacement of the pair of partition plates 48, 50 is restricted by the elastic wall 46 and hence, a liquid is allowed to flow between the first liquid chamber 36A and the second liquid chamber 36B through the orifice flow passage 42 whereby the vibrations can be dampened due to such a liquid flow effect.

Further, according to this embodiment, when minute amplitude vibrations in a high frequency range are inputted, the partition plates 48, 50 are vibrated with minute amplitude in the axial direction X and hence, liquid flow in the axial direction X is generated in the inside of the through holes 80 formed in the partition plates 48, 50 whereby the through holes 80 can be used as high frequency orifices which are operated in a high frequency range higher than the high frequency range of the above-mentioned orifice flow passage 42. That is, the through holes 80 can be operated as the high frequency orifices at the time of inputting minute amplitude where the displacements of the partition plates 48, 50 are not restricted by the elastic wall 46. Accordingly, liquid resonance is generated in a specific frequency range and hence, a dynamic spring constant in the frequency range can be lowered. For example, by tuning the resonance of orifices generated by the above-mentioned through holes 80 to a frequency range where vehicle performances are deteriorated thus lowering a dynamic spring constant, transmitting vibrations or noises can be reduced. Here, characteristics of the through holes 80 can be tuned by changing the number of through holes 80, an opening area of the through hole 80, a length of the holes 80 and the like.

Also according to this embodiment, the recessed portions 74 are formed on the elastic wall portion of the elastic wall 46 which is sandwiched by the sandwiching portions 60 of the partition plates 48, 50, and the through holes 80 are formed at positions where the through holes 80 overlap with the recessed portions 74 in the axial direction X. In this manner, the low rigidity portions 76 formed by the recessed portions 74 are provided to correspond to the through holes 80 and hence, the elastic wall 46 can be easily vibrated whereby liquid flow in the through holes 80 can be enhanced.

Also according to this embodiment, since the plural recessed portions 74 are formed on the elastic wall 46 in the circumferential direction C, the low rigidity portions 76 having a small wall thickness are intermittently formed in the circumferential direction C on the elastic wall portion sandwiched by the sandwiching portions 60, and the through holes 80 are provided to correspond to the respective recessed portions 74. Accordingly, the low rigidity portions 76 corresponding to the through holes 80 and the high rigidity portions 78 which are sandwiched by the sandwiching portions 60 in a compressed state in the axial direction X are alternately provided in the circumferential direction C. Accordingly, while imparting a function of a high frequency orifice to the through holes 80, by maintaining a contact state of the partition plates 48, 50 with the elastic wall 46 at the high rigidity portions 78 between the through holes 80, it is possible to reduce an abnormal sound attributed to a striking sound between the elastic wall 46 and the partition plates 48, 50.

In this embodiment, further, the pair of partition plates 48, 50 includes the sandwiching portions 60 which sandwich the elastic wall 46 on the radially outer Ko side of the connecting portion 56. With respect to each sandwiching portion 60, in the first sandwiching portion 64 arranged on the radially outer Ko side, the high compression sandwiching portion 68 which sandwiches the elastic wall 46 in the axial direction X with a higher compression rate than the second sandwiching portion 66 on the radially inner Ki side is formed. Accordingly, the displacement of the partition plates 48, 50 in the axial direction X before the separation of the partition plates 48, 50 from the elastic wall 46 starts can be set large and hence, an abnormal sound caused by the separation of the partition plates 48, 50 from the elastic wall 46 can be reduced.

To explain this point in detail, in general, a pair of partition plates which is connected to each other via a center connecting portion is separated from an elastic wall with respect to the displacement in the axial direction in such a manner that the separation starts from an outer peripheral side. To the contrary, according to this embodiment, for example, when the partition plates 48, 50 are excessively largely displaced upward, although the upper-side partition plate 48 intends to leave from the elastic wall 46 starting from the outer peripheral side of the partition plate 48, due to the provision of the high compression sandwiching portion 68 on the outer peripheral side which constitutes a separation start point, a contact state of the upper-side partition plate 48 with the elastic wall 46 can be maintained at the high compression sandwiching portion 68. Accordingly, the displacement of the partition plates 48, 50 in the axial direction X before the partition plates 48, 50 start the separation from the elastic wall 46 can be increased. In this embodiment, particularly, even when the estimated maximum displacement of the partition plates 48, 50 in the axial direction X is generated, the compression rate of the high compression sandwiching portion 68 is set to a high level such that the high compression sandwiching portion 68 is not separated from the wall surface of the elastic wall 46 and hence, the separation of the sandwiching portion 60 from the elastic wall 46 can be surely prevented whereby the occurrence of an abnormal sound can be effectively prevented.

Further, the high compression sandwiching portion 68 is formed on the radially outer Ko side in the sandwiching portions 60 of the partition plates 48, 50, and it is not intended that the compression rate is increased over the whole radial direction K. Accordingly, the partition plates 48, 50 can be easily reciprocated in response to high frequency vibrations while suppressing the increase of rigidity of the elastic wall 46 as a whole. Further, at the time of assembling the partition element 40, defective welding at the connecting portion 56 caused by a reaction force of rubber of the elastic wall 46 compressed in the axial direction X can be avoided thus providing excellent assembling property to the partition element 40.

In this embodiment, the above-mentioned recessed portions 74 are formed in the elastic wall portion sandwiched by the high compression sandwiching portions 68 and hence, the following manner of operation and advantageous effects can be acquired. That is, the high compression sandwiching portion 68 is a part which increases a compression rate in the axial direction X for preventing the separation of the partition plates 48, 50 from the elastic wall 46 even at the time of large displacement of the partition plates 48, 50 in the axial direction X. On the other hand, when the compression rate in the axial direction X is increased, the hardness of the elastic wall 46 is increased correspondingly. Accordingly, by forming the low rigidity portions 76 caused by the recessed portions 74 on the high compression sandwiching portion 68 intermittently, it is possible to increase the compression rate in the axial direction X in such a manner that the partition plates 48, 50 are not separated from the elastic wall 46 without making the elastic wall portion sandwiched by the first sandwiching portions 64 on the radially outer Ko side hard, rather by maintaining such a portion soft. Further, a dynamic spring constant can be reduced by easing the reciprocating movement of the partition plates 48, 50 in the axial direction X with respect to minute amplitude vibrations in a high frequency band. Further, since the low rigidity portions 76 are formed on the first sandwiching portions 64 on the outer peripheral side, when vibrations in a high frequency range are inputted, the pair of partition plates 48, 50 can be smoothly reciprocated in the axial direction X while suppressing the displacement of the partition plates 48, 50 in the twisting direction which inclines an axis of the partition plates 48, 50.

Further, in this embodiment, the outer peripheral portion 46A of the elastic wall 46 is formed with a large wall thickness and hence, the reciprocating displacement of the partition plates 48, 50 can be effectively restricted at the time of large amplitude vibrations in a low frequency range.

### (Second embodiment)

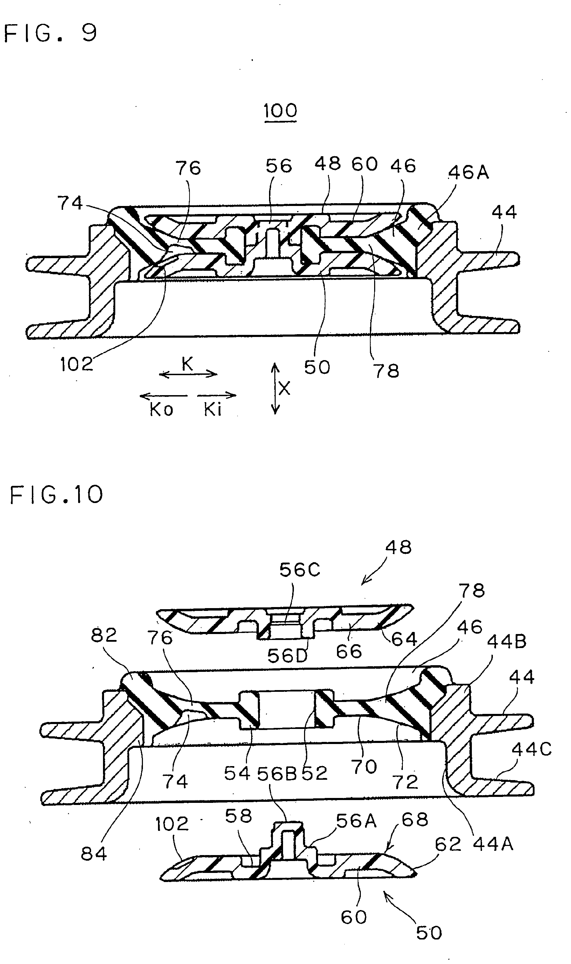

A liquid-sealed antivibration device according to the second embodiment is explained in conjunction with Fig. 9 to Fig. 13. The second embodiment differs from the first embodiment only with respect to the constitution of a partition element 100. Hereinafter, the explanation is made with respect to only points which make the second embodiment different from the first embodiment.

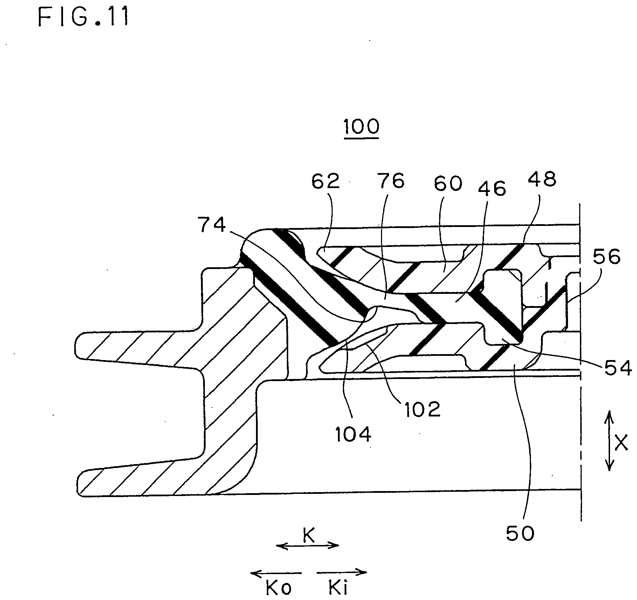

As shown in Fig. 9 and Fig. 10, in this embodiment, the through holes 80 are not formed on the partition plates 48, 50. Instead, to correspond to the recessed portions 74 formed on the wall surface of the elastic wall 46 which faces the second liquid chamber 36B side (the wall surface of the elastic wall 46 on a lower side), grooves 102 which extend in the radial direction K for connecting the recessed portion 74 with the second liquid chamber 36B on the radially outer Ko side are formed on a plate surface of the lower partition plate 50. Due to such a constitution, on the radially outer Ko side of the recessed portion 74, a gap 104 is formed by the above-mentioned groove 102 between the plate surface of the partition plate 50 and the wall surface of the elastic wall 46 (see Fig. 11), and the inside of the recessed portion 74 and the second liquid chamber 36B are connected with each other by way of the gap 104 in a state where a liquid is allowed to flow between the recessed portion 74 and the second liquid chamber 36B.

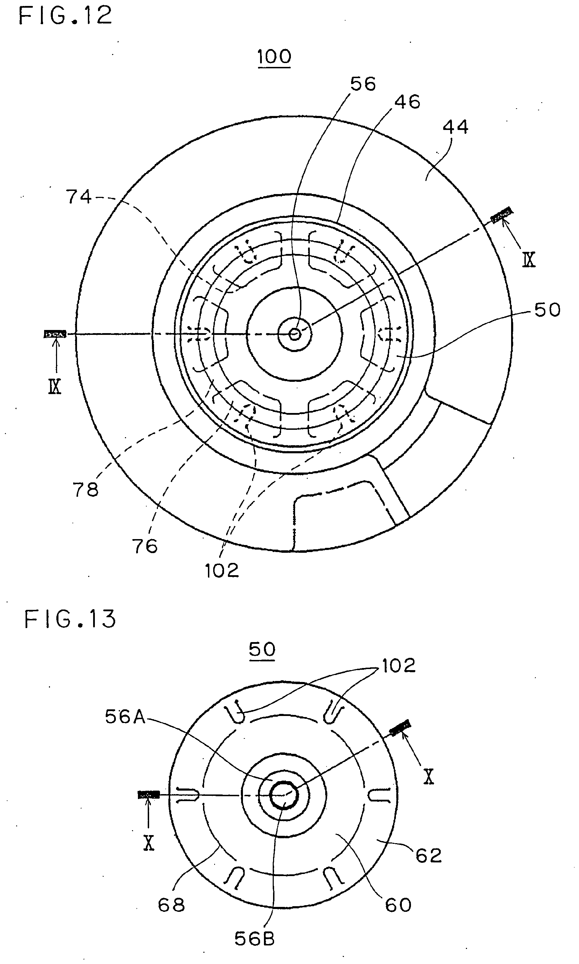

The groove 102, on the plate surface of the partition plate 50 which faces the recessed portion 74 in an opposed manner, extends toward the radially outer Ko side, and is provided on a peripheral portion of the partition plate 50 ranging from the first sandwiching portion 64 to the clearance forming portion 62. Further, as shown in Fig. 12, the groove 102 is formed within a range of the recessed portion 74 in the circumferential direction C. Plural grooves 102 are formed in the circumferential direction C at equal intervals to correspond to the respective recessed portions 74. Due to such a constitution, as shown also in Fig. 13, the grooves 102 are formed into radial grooves which extend toward the radially outer Ko side from the respective recessed portions 74. Accordingly, on the elastic wall 46, low rigidity portions 76 corresponding to the grooves 102 and high rigidity portions 78 which are sandwiched in a compressed state in the axial direction X by the sandwiching portions 60 are alternately arranged in the circumferential direction C, and the gaps 104 are formed at predetermined intervals without being continuously formed in the circumferential direction C.

The above-mentioned gaps 104 are formed such that a liquid is allowed to flow between the recessed portions 74 and the second liquid chamber 36B when the partition plate 48, 50 are at a neutral position, and at the time of large amplitude vibrations, the pair of partition plates 48, 50 is displaced in the axial direction X so that the grooves 102 are pushed to the elastic wall 46 whereby the grooves 102 are blocked. Here, the neutral position means a position in a state where there is no liquid pressure difference between the first liquid chamber 36A and the second liquid chamber 36B, that is, a position in a state where the pair of partition plates 48, 50 is not displaced in the axial direction X.

Other constitutions of this embodiment are substantially equal to the corresponding constitutions of the first embodiment also including the constitution of the partition element, and this embodiment can acquire substantially the same manner of operation and advantageous effects as the first embodiment basically. As the manner of operation and advantageous effects peculiar to this embodiment, at the time of minute amplitude vibrations, the gaps 104 formed by the grooves 102 provided to the partition plate 50 can be operated as high frequency orifice flow passages and hence, liquid resonance in a specific frequency range can be generated at such portions whereby a dynamic spring constant in such a frequency range can be lowered. Also in this embodiment, at the time of large amplitude vibrations, the partition plate 50 is displaced in the axial direction X so that the partition plate 50 can block the gaps 104 whereby this embodiment is advantageous in securing a high damping performance originally acquired by the orifice flow passage 42.

### (Third embodiment)

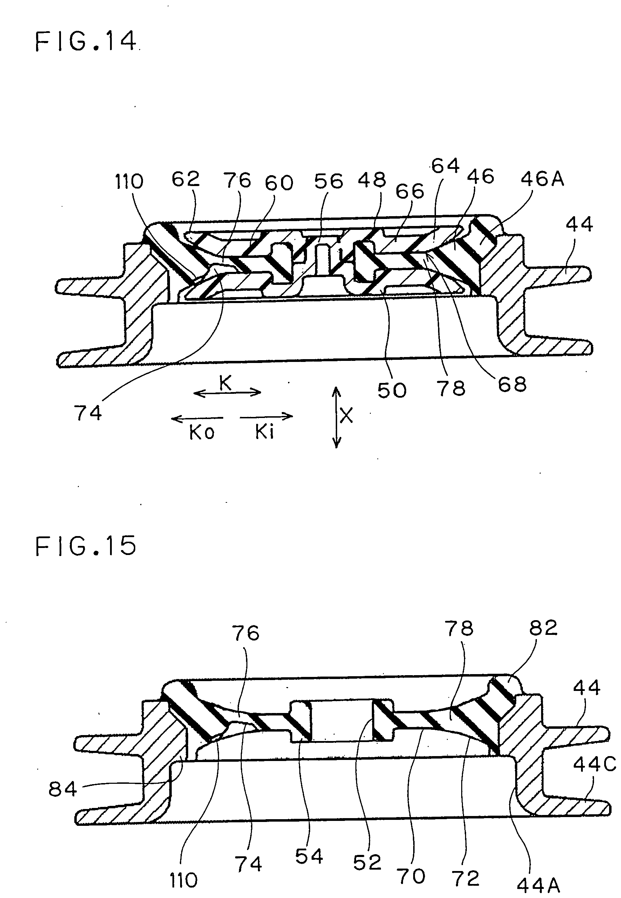

A liquid-sealed antivibration device according to the third embodiment is explained in conjunction with Fig. 14 to Fig. 17. The third embodiment adopts the constitution where grooves 110 are formed on the elastic wall 46 in place of the constitution of the above-mentioned second embodiment where the grooves 102 are formed in the partition plate 50, and other constitutions of the third embodiment are substantially equal to the corresponding constitutions of the second embodiment.

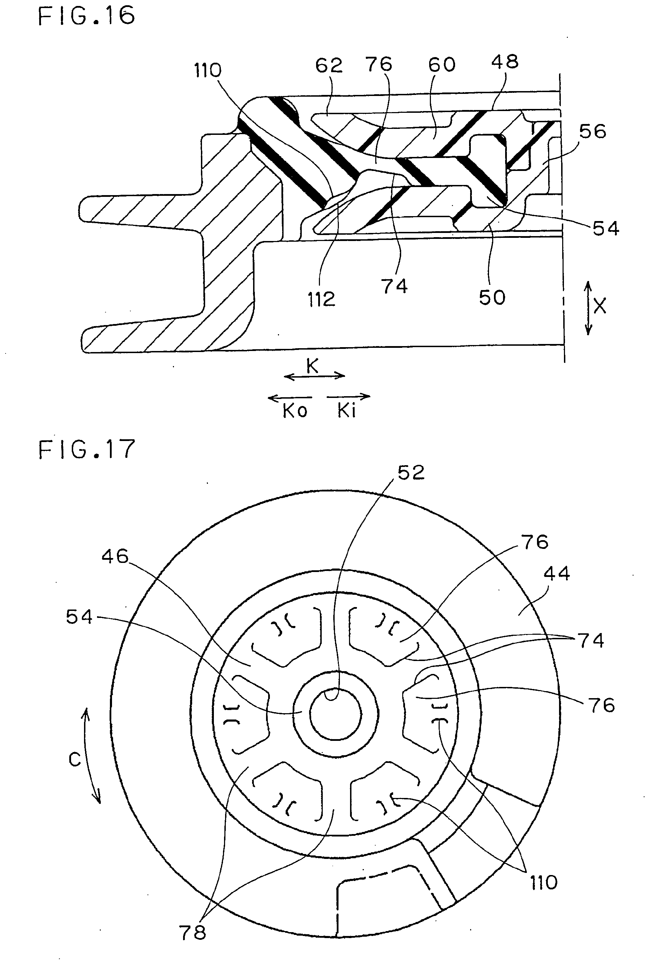

That is, in this embodiment, as shown in Fig. 14 and Fig. 15, the grooves 102 are not formed on the partition plate 50. Instead, to correspond to the recessed portion 74 formed on a wall surface of the elastic wall 46 which faces a second liquid chamber 36B side (a wall surface of the elastic wall 46 on a lower side), a groove 110 which extends in the radial direction K for connecting the recessed portion 74 with the second liquid chamber 36B on the radially outer Ko side is formed on a wall surface of the elastic wall 46 on a lower side which faces the lower partition plate 50 in an opposed manner. Due to such a constitution, on the radially outer Ko side of the recessed portion 74, a gap 112 is formed by the above-mentioned groove 110 between the plate surface of the partition plate 50 and the wall surface of the elastic wall 46 (see Fig. 16), and the inside of the recessed portion 74 and the second liquid chamber 36B are connected with each other by way of the gap 112 in a state where a liquid is allowed to flow between the recessed portion 74 and the second liquid chamber 36B.

The groove 110, on the wall surface of the elastic wall portion on an outer peripheral side of the recessed portion 74, extends toward the radially outer Ko side from the recessed portion 74. Further, as shown in Fig. 17, the groove 110 is formed within a range where the recessed portion 74 is formed in the circumferential direction C. Plural grooves 110 are formed in the circumferential direction C at equal intervals to correspond to the respective recessed portions 74. Due to such a constitution, the grooves 110 are formed into radial grooves which extend toward the radially outer Ko side from the respective recessed portions 74. Accordingly, on the elastic wall 46, low rigidity portions 76 corresponding to the grooves 110 and high rigidity portions 78 which are sandwiched in a compressed state in the axial direction X by the sandwiching portions 60 are alternately arranged in the circumferential direction C, and the gaps 112 are formed at predetermined intervals without being continuously formed in the circumferential direction C.

The above-mentioned gaps 112 are formed such that a liquid is allowed to flow between the recessed portions 74 and the second liquid chamber 36B when the partition plates 48, 50 are at a neutral position, and at the time of large amplitude vibrations, the pair of partition plates 48, 50 is displaced in the axial direction X so that the partition plate 50 is pushed to the grooves 110 whereby the grooves 110 are blocked.

Also in this embodiment, in the same manner as the second embodiment, at the time of minute amplitude vibrations, the gaps 112 formed by the grooves 110 provided to the partition plate 50 can be operated as high frequency orifice flow passages and hence, liquid resonance in a specific frequency range can be generated at such portions whereby a dynamic spring constant in such a frequency range can be lowered. Further, at the time of large amplitude vibrations, the partition plate 50 is displaced in the axial direction X so that the partition plate 50 can block the gaps 112 whereby this embodiment is advantageous in securing a high damping performance originally acquired by the orifice flow passage 42. Other constitutions and the manner of operation and advantageous effects of the third embodiment are substantially equal to the corresponding constitutions and the manner of operation and advantageous effects of the second embodiment and hence, these explanations are omitted.

### (Other embodiments)

The arrangement, the number and the shape of the through holes 80 formed in the partition plates 48, 50 are not limited to the embodiments described in the above-mentioned first embodiment, and various modifications are conceivable. Although the through holes 80 are formed in both upper and lower partition plates 48, 50 in the first embodiment, the through holes 80 may be formed in either one of partition plates 48, 50. Further, although the recessed portions 74 are formed on the elastic wall 46 and the through holes 80 are formed so as to overlap with the recessed portions 74 in the first embodiment, it is not indispensable to form the through holes 80 in an overlapping manner with the recessed portions 74, and also the formation of the recessed portions 74 per se is not also indispensable. Further, the recessed portions 74 may be formed on the upper surface of the elastic wall 46 in place of the lower surface of the elastic wall 46 or may be formed on both upper and lower surfaces of the elastic wall 46 in an overlapping manner.

In the second and third embodiments, the arrangement, the number and the shape of the grooves 102, 110 formed on the partition plate 50 or the elastic wall 46 are not limited to the above-mentioned embodiments, and various modifications are conceivable. Further, in the second and third embodiment, although the recessed portions 74 are formed on the lower surface of the elastic wall 46 and the grooves 102, 110 which are connected with the recessed portions 74 are formed on the lower surface of the lower partition plate 50 or the elastic wall 46 so as to connect the recessed portions 74 with the second liquid chamber 36B, substantially the same manner of operation and advantageous effects can be obtained even with the constitution where recessed portions are formed on the upper surface of the elastic wall 46, and grooves connected with the recessed portions are formed on the upper partition plate 48 or on the upper surface of the elastic wall 46 so as to connect the recessed portions with the first liquid chamber 36A. Further, these grooves and gaps may be formed on both upper and lower surfaces of the elastic wall 46. Further, by combining the constitution of the second embodiment where the grooves 102 are formed on the partition plate 50 and the constitution of the third embodiment where the grooves 112 are formed on the elastic wall 46, the gaps may be formed by both grooves 102, 112.

Further, it may also be possible to combine the constitution of the first embodiment where the through holes 80 are formed in the partition plates 48, 50 and the constitutions of the second and third embodiments where the gaps 104, 112 are formed by the grooves 102, 110.

### INDUSTRIAL APPLICABILITY

The invention is applicable to various antivibration devices for automobiles which join a vibration body and a support body to each other in an antivibration manner including an engine mount of an automobile. Further, the invention is also applicable to various vehicles other than the automobile.

## Claims

1. A liquid-sealed antivibration device comprising:
a first mounting member (12), a second mounting member (14) having a cylindrical shape; a vibration-isolating base body (16) which connects the first mounting member and the second mounting member and is made of a rubbery elastic material; a diaphragm (38) formed of a rubbery elastic film which is mounted on the second mounting member so as to form a liquid sealed chamber (36) between the diaphragm and the vibration-isolating base body; a partition element (40) which partitions the liquid sealed chamber into a first liquid chamber (36A) on a vibration-isolating base body side and a second liquid chamber (36B) on a diaphragm side; and an orifice flow passage (42) which allows the first liquid chamber and the second liquid chamber to be communicated with each other, wherein
the partition element comprises:
an annular orifice forming member (44) which is mounted on an inner side of a peripheral wall portion of the second mounting member and forms the orifice flow passage;
an elastic wall (46) which blocks a space formed within an inner peripheral surface of the orifice forming member and is made of a rubbery elastic material; and
a pair of partition plates (48, 50) which are connected to each other via a connecting portion (56) which penetrates a radially central portion of the elastic wall, and sandwich the elastic wall in the axial direction of the elastic wall, wherein
a through hole (80) which penetrates at least one of the partition plates in the axial direction is formed on a radially outer side of the connecting portion, and
the pair of partition plates (48, 50) has sandwiching portions (60) which sandwich the elastic wall on a radially outer side of the connecting portion,
**characterised in that**
the elastic wall (46) has a recessed portion (74) on at least one of front and back wall surfaces of the elastic wall at an elastic wall portion sandwiched by the sandwiching portions, and the through hole (80) is formed at a position where the through hole overlaps with the recessed portion in the axial direction.

2. The liquid-sealed antivibration device according to claim 1. wherein low rigidity portions (76) having a small wall thickness are intermittently formed in the elastic wall portion which is sandwiched by the sandwiching portions by forming a plurality of the recessed portions in the circumferential direction of the elastic wall, and a plurality of the through holes are formed at positions where the through holes overlap with the respective recessed portions in the axial direction.

3. The liquid-sealed antivibration device according to claim 1 or 2, wherein the through holes are formed in the pair of partition plates respectively such that the through holes overlap with each other in the axial direction.

4. The liquid-sealed antivibration device according to any one of claims 1 to 3, wherein the sandwiching portion is constituted of a first sandwiching portion (64) on a radially outer side and a second sandwiching portion (66) on a radially inner side, a high compression sandwiching portion (68) which sandwiches the elastic wall in the axial direction with a higher compression rate than the second sandwiching portion is formed on the first sandwiching portion, and the recessed portion is formed in the elastic wall portion sandwiched by the high compression sandwiching portion.

5. A liquid-sealed antivibration device comprising:
a first mounting member (12), a second mounting member (14) having a cylindrical shape; a vibration-isolating base body (16) which connects the first mounting member and the second mounting member and is made of a rubbery elastic material; a diaphragm (38) formed of a rubbery elastic film which is mounted on the second mounting member so as to form a liquid sealed chamber (36) between the diaphragm and the vibration-isolating base body; a partition element (40) which partitions the liquid sealed chamber into a first liquid chamber (36A) on a vibration-isolating base body side and a second liquid chamber (36B) on a diaphragm side; and an orifice flow passage (42) which allows the first liquid chamber and the second liquid chamber to be communicated with each other, wherein
the partition element comprises:
an annular orifice forming member (44) which is mounted on an inner side of a peripheral wall portion of the second mounting member and forms the orifice flow passage;
an elastic wall (46) which blocks a space formed within an inner peripheral surface of the orifice forming member and is made of a rubbery elastic material; and
a pair of partition plates (48, 50) which are connected to each other via a connecting portion (56) which penetrates a radially central portion of the elastic wall, and sandwich the elastic wall in the axial direction of the elastic wall, wherein
the pair of partition plates (48, 50) has sandwiching portions (60) which sandwich the elastic wall on a radially outer side of the connecting portion,
**characterised in that**
a recessed portion (74) is formed on at least one of front and back wall surfaces of the elastic wall, and a groove (102, 110) which extends in the radial direction for connecting the recessed portion with the first liquid chamber or the second liquid chamber on a radially outer side of the recessed portion is formed on a plate surface of the partition plate or a wall surface of the elastic wall, and the inside of the recessed portion and the first liquid chamber or the second liquid chamber are connected with each other in a state where liquid is allowed to flow between the recessed portion and the first liquid chamber or the second liquid chamber through a gap formed by the groove between a plate surface of the partition plate and a wall surface of the elastic wall, and
a plurality of the recessed portions (74) are formed on an elastic wall portion sandwiched by the sandwiching portions (60) in the circumferential direction of the elastic wall thus forming low rigidity portions (76) having a small wall thickness on the elastic wall portion intermittently in the circumferential direction, and the groove (102, 110) is formed of a radial groove which extends toward a radially outer side from each recessed portion.

6. The liquid-sealed antivibration device according to claim. 5, wherein the sandwiching portion is constituted of a first sandwiching portion (64) on a radially outer side and a second sandwiching portion (66) on a radially inner side, a high compression sandwiching portion (68) which sandwiches the elastic wall in the axial direction with a higher compression rate than the second sandwiching portion is formed on the first sandwiching portion, and the recessed portion is formed in the elastic wall portion sandwiched by the high compression sandwiching portion.

## Patentansprüche

1. Flüssigkeitsdichte-Vibrationsdämpfungsvorrichtung umfassend:
ein erstes Befestigungselement (12), ein zweites Befestigungselement (14) mit zylindrischer Form; einen vibrationsisolierenden Grundkörper (16), der das erste Befestigungselement und das zweite Befestigungselement verbindet und aus einem gummiartigen elastischen Material hergestellt ist; eine Membran (38) aus gummiartigem elastischem Film, die am zweiten Befestigungselement befestigt ist, so dass zwischen der Membran und dem vibrationsisolierenden Grundkörper eine flüssigkeitsdichte Kammer (36) ausgebildet ist; ein Unterteilungselement (40), das die flüssigkeitsdichte Kammer in eine erste Flüssigkeitskammer (36A) auf Seiten des vibrationsisolierenden Grundkörpers und eine zweite Flüssigkeitskammer (36B) auf Seiten der Membran unterteilt; und eine Strömungsdurchlassleitung (42), durch die die erste und die zweite Flüssigkeitskammer in Verbindung miteinander stehen können, wobei
das Unterteilungselement Folgendes umfasst:
ein ringförmiges durchlassbildendes Element (44), das an einer Innenseite eines Umfangswandabschnitts des zweiten Befestigungselements angebracht ist und die Strömungsdurchlassleitung bildet;
eine elastische Wand (46), die einen innerhalb einer Innenumfangsfläche des durchlassbildenden Elements ausgebildeten Raum sperrt und aus einem gummiartigen elastischen Material hergestellt ist; und
ein Paar Unterteilungsplatten (48, 50), die über einen Verbindungsabschnitt (56), der durch einen radial mittleren Abschnitt der elastischen Wand hindurchtritt, miteinander verbunden sind und zwischen denen die elastische Wand in ihrer Axialrichtung eingelegt ist, wobei
radial außerhalb des Verbindungsabschnitts ein Durchgangsloch (80) ausgebildet ist, das durch mindestens eine der Unterteilungsplatten in Axialrichtung hindurchtritt, und
das Paar Unterteilungsplatten (48, 50) Sandwich-Abschnitte (60) aufweist, zwischen denen die elastische Wand radial außerhalb des Verbindungsabschnitts eingelegt ist,
**dadurch gekennzeichnet, dass**
die elastische Wand (46) an ihrer vorderen und/oder hinteren Wandfläche einen zurückgenommenen Abschnitt (74) an einem elastischen Wandabschnitt aufweist, der zwischen den Sandwich-Abschnitten eingelegt ist, und das Durchgangsloch (80) an einem Ort ausgebildet ist, an dem es in Axialrichtung mit dem zurückgenommenen Abschnitt überlappt.

2. Flüssigkeitsdichte-Vibrationsdämpfungsvorrichtung nach Anspruch 1, wobei in dem elastischen Wandabschnitt, der zwischen den Sandwich-Abschnitten eingelegt ist, Abschnitte (76) niedriger Steifigkeit mit geringer Wanddicke in Unterbrechungen ausgebildet sind, indem mehrere der zurückgenommenen Abschnitte in Umfangsrichtung der elastischen Wand vorgesehen sind, und wobei mehrere der Durchgangslöcher an Orten ausgebildet sind, an denen sie mit den entsprechenden zurückgenommenen Abschnitten in Axialrichtung überlappen.

3. Flüssigkeitsdichte-Vibrationsdämpfungsvorrichtung nach Anspruch 1 oder 2, wobei die Durchgangslöcher in dem Paar Unterteilungsplatten entsprechenderweise so ausgebildet sind, dass sie einander in Axialrichtung überlappen.

4. Flüssigkeitsdichte-Vibrationsdämpfungsvorrichtung nach einem der Ansprüche 1 bis 3, wobei der Sandwich-Abschnitt aus einem ersten Sandwich-Abschnitt (64) radial außen und einem zweiten Sandwich-Abschnitt (66) radial innen aufgebaut ist, auf dem ersten Sandwich-Abschnitt ein Hochkompressions-Sandwich-Abschnitt (68) ausgebildet ist, an dem die elastische Wand in Axialrichtung mit höherem Kompressionsverhältnis als am zweiten Sandwich-Abschnitt eingelegt ist, und der zurückgenommene Abschnitt in dem elastischen Wandabschnitt ausgebildet ist, der am Hochkompressions-Sandwich-Abschnitt eingelegt ist.

5. Flüssigkeitsdichte-Vibrationsdämpfungsvorrichtung umfassend:
ein erstes Befestigungselement (12), ein zweites Befestigungselement (14) mit zylindrischer Form; einen vibrationsisolierenden Grundkörper (16), der das erste Befestigungselement und das zweite Befestigungselement verbindet und aus einem gummiartigen elastischen Material hergestellt ist; eine Membran (38) aus gummiartigem elastischem Film, die am zweiten Befestigungselement befestigt ist, so dass zwischen der Membran und dem vibrationsisolierenden Grundkörper eine flüssigkeitsdichte Kammer (36) ausgebildet ist; ein Unterteilungselement (40), das die flüssigkeitsdichte Kammer in eine erste Flüssigkeitskammer (36A) auf Seiten des vibrationsisolierenden Grundkörpers und eine zweite Flüssigkeitskammer (36B) auf Seiten der Membran unterteilt; und
eine Strömungsdurchlassleitung (42), durch die die erste und die zweite Flüssigkeitskammer in Verbindung miteinander stehen können, wobei
das Unterteilungselement Folgendes umfasst:
ein ringförmiges durchlassbildendes Element (44), das an einer Innenseite eines Umfangswandabschnitts des zweiten Befestigungselements angebracht ist und die Strömungsdurchlassleitung bildet;
eine elastische Wand (46), die einen innerhalb einer Innenumfangsfläche des durchlassbildenden Elements ausgebildeten Raum sperrt und aus einem gummiartigen elastischen Material hergestellt ist; und
ein Paar Unterteilungsplatten (48, 50), die über einen Verbindungsabschnitt (56), der durch einen radial mittleren Abschnitt der elastischen Wand hindurchtritt, miteinander verbunden sind und zwischen denen die elastische Wand in ihrer Axialrichtung eingelegt ist, wobei
das Paar Unterteilungsplatten (48, 50) Sandwich-Abschnitte (60) aufweist, zwischen denen die elastische Wand radial außerhalb des Verbindungsabschnitts eingelegt ist,
**dadurch gekennzeichnet, dass**
auf einer vorderen und/oder hinteren Wandfläche der elastischen Wand ein zurückgenommener Abschnitt (74) ausgebildet ist und auf einer Plattenfläche der Unterteilungsplatte oder einer Wandfläche der elastischen Wand eine Rille (102, 110) ausgebildet ist, die in Radialrichtung verläuft, um den zurückgenommenen Abschnitt radial außerhalb des zurückgenommenen Abschnitts mit der ersten oder der zweiten Flüssigkeitskammer zu verbinden, und das Innere des zurückgenommenen Abschnitts und die erste oder zweite Flüssigkeitskammer in einem Zustand miteinander verbunden sind, in dem Flüssigkeit zwischen dem zurückgenommenen Abschnitt und der ersten oder zweiten Flüssigkeitskammer durch eine Lücke strömen kann, die von der Rille zwischen einer Plattenfläche der Unterteilungsplatte und einer Wandfläche der elastischen Wand gebildet wird, und
auf einem elastischen Wandabschnitt, der zwischen den Sandwich-Abschnitten (60) eingelegt ist, in Umfangsrichtung der elastischen Wand mehrere der zurückgenommenen Abschnitt (74) ausgebildet sind, wodurch am elastischen Wandabschnitt mit Unterbrechungen in Umfangsrichtung Abschnitte (76) niedriger Steifigkeit mit geringer Wanddicke ausgebildet sind, und die Rille (102, 110) aus einer radialen Rille gebildet ist, die von jedem zurückgenommenen Abschnitt radial nach außen verläuft.

6. Flüssigkeitsdichte-Vibrationsdämpfungsvorrichtung nach Anspruch 5, wobei der Sandwich-Abschnitt aus einem ersten Sandwich-Abschnitt (64) radial außen und einem zweiten Sandwich-Abschnitt (66) radial innen aufgebaut ist, auf dem ersten Sandwich-Abschnitt ein Hochkompressions-Sandwich-Abschnitt (68) ausgebildet ist, an dem die elastische Wand in Axialrichtung mit höherem Kompressionsverhältnis als am zweiten Sandwich-Abschnitt eingelegt ist, und der zurückgenommene Abschnitt in dem elastischen Wandabschnitt ausgebildet ist, der am Hochkompressions-Sandwich-Abschnitt eingelegt ist.

## Revendications

1. Dispositif antivibrations étanche aux liquides comprenant :
un premier élément de montage (12), un deuxième élément de montage (14) ayant une forme cylindrique; un corps de base (16) d'isolation de vibrations qui connecte le premier élément de montage et le deuxième élément de montage et est constitué d'un matériau élastique caoutchouteux ; un diaphragme (38) constitué d'un film élastique caoutchouteux qui est monté sur le deuxième élément de montage de manière à former une chambre (36) étanche aux liquides entre le diaphragme et le corps de base d'isolation de vibrations ; un élément de cloisonnement (40) qui cloisonne la chambre étanche aux liquides en une première chambre (36A) pour liquide sur un côté corps de base d'isolation de vibrations et une deuxième chambre (36B) pour liquide sur un côté diaphragme ; et un passage d'écoulement à orifice (42) qui permet que la première chambre pour liquide et la deuxième chambre pour liquide soient mises en communication l'une avec l'autre, dans lequel
l'élément de cloisonnement comprend :
un élément (44) de formation d'orifice annulaire qui est monté sur un côté intérieur d'une partie de paroi périphérique du deuxième élément de montage et forme le passage d'écoulement à orifice ;
une paroi élastique (46) qui bloque un espace formé à l'intérieur d'une surface périphérique intérieure de l'élément de formation d'orifice et est constituée d'un matériau élastique caoutchouteux ; et
une paire de plaques de cloisonnement (48, 50) qui sont connectées l'une à l'autre par l'intermédiaire d'une partie de connexion (56) qui pénètre une partie radialement centrale de la paroi élastique, et prennent en sandwich la paroi élastique dans le sens axial de la paroi élastique, dans lequel
un trou traversant (80) qui pénètre au moins une des plaques de cloisonnement dans le sens axial est formé sur un côté radialement extérieur de la partie de connexion, et
la paire de plaques de cloisonnement (48, 50) a des parties de prise en sandwich (60) qui prennent en sandwich la paroi élastique sur un côté radialement extérieur de la partie de connexion,
**caractérisé en ce que**
la paroi élastique (46) a une partie en renfoncement (74) sur au moins une de surfaces de paroi avant et arrière de la paroi élastique au niveau d'une partie de paroi élastique prise en sandwich par les parties de prise en sandwich, et le trou traversant (80) est formé en une position où le trou traversant se chevauche avec la partie en renfoncement dans le sens axial.

2. Dispositif antivibrations étanche aux liquides selon la revendication 1, dans lequel des parties (76) de faible rigidité ayant une petite épaisseur de paroi sont formées de manière intermittente dans la partie de paroi élastique qui est prise en sandwich par les parties de prise en sandwich en formant une pluralité des parties en renfoncement dans le sens circonférentiel de la paroi élastique, et une pluralité des trous traversants sont formés en des positions où les trous traversants se chevauchent avec les parties en renfoncement respectives dans le sens axial.

3. Dispositif antivibrations étanche aux liquides selon la revendication 1 ou 2, dans lequel les trous traversants sont formés dans la paire de plaques de cloisonnement respectivement de telle manière que les trous traversants se chevauchent les uns les autres dans le sens axial.

4. Dispositif antivibrations étanche aux liquides selon l'une quelconque des revendications 1 à 3, dans lequel la partie de prise en sandwich est constituée d'une première partie de prise en sandwich (64) sur un côté radialement extérieur et d'une deuxième partie de prise en sandwich (66) sur un côté radialement intérieur, une partie de prise en sandwich (68) à compression élevée qui prend en sandwich la paroi élastique dans le sens axial avec un taux de compression plus élevé que la deuxième partie de prise en sandwich est formée sur la première partie de prise en sandwich, et la partie en renfoncement est formée dans la partie de paroi élastique prise en sandwich par la partie de prise en sandwich à compression élevée.

5. Dispositif antivibrations étanche aux liquides comprenant :
un premier élément de montage (12), un deuxième élément de montage (14) ayant une forme cylindrique; un corps de base (16) d'isolation de vibrations qui connecte le premier élément de montage et le deuxième élément de montage et est constitué d'un matériau élastique caoutchouteux ; un diaphragme (38) constitué d'un film élastique caoutchouteux qui est monté sur le deuxième élément de montage de manière à former une chambre (36) étanche aux liquides entre le diaphragme et le corps de base d'isolation de vibrations ; un élément de cloisonnement (40) qui cloisonne la chambre étanche aux liquides en une première chambre (36A) pour liquide sur un côté corps de base d'isolation de vibrations et une deuxième chambre (36B) pour liquide sur un côté diaphragme ; et un passage d'écoulement à orifice (42) qui permet que la première chambre pour liquide et la deuxième chambre pour liquide soient mises en communication l'une avec l'autre, dans lequel
l'élément de cloisonnement comprend :
un élément (44) de formation d'orifice annulaire qui est monté sur un côté intérieur d'une partie de paroi périphérique du deuxième élément de montage et forme le passage d'écoulement à orifice ;
une paroi élastique (46) qui bloque un espace formé à l'intérieur d'une surface périphérique intérieure de l'élément de formation d'orifice et est constituée d'un matériau élastique caoutchouteux ; et
une paire de plaques de cloisonnement (48, 50) qui sont connectées l'une à l'autre par l'intermédiaire d'une partie de connexion (56) qui pénètre une partie radialement centrale de la paroi élastique, et prennent en sandwich la paroi élastique dans le sens axial de la paroi élastique, dans lequel
la paire de plaques de cloisonnement (48, 50) a des parties de prise en sandwich (60) qui prennent en sandwich la paroi élastique sur un côté radialement extérieur de la partie de connexion,
**caractérisé en ce que**
une partie en renfoncement (74) est formée sur au moins une de surfaces de paroi avant et arrière de la paroi élastique et une rainure (102, 110) qui s'étend dans le sens radial pour connecter la partie en renfoncement avec la première chambre pour liquide ou la deuxième chambre pour liquide sur un côté radialement extérieur de la partie en renfoncement est formée sur une surface de plaque de la plaque de cloisonnement ou une surface de paroi de la paroi élastique, et l'intérieur de la partie en renfoncement et de la première chambre pour liquide ou de la deuxième chambre pour liquide sont connectés l'un avec l'autre dans un état où un liquide est laissé s'écouler entre la partie en renfoncement et la première chambre pour liquide ou la deuxième chambre pour liquide à travers un espace formé par la rainure entre une surface de plaque de la plaque de cloisonnement et une surface de paroi de la paroi élastique, et
une pluralité des parties en renfoncement (74) sont formées sur une partie de paroi élastique prise en sandwich par les parties de prise en sandwich (60) dans le sens circonférentiel de la paroi élastique formant ainsi des parties (76) de faible rigidité ayant une petite épaisseur de paroi sur la partie de paroi élastique de manière intermittente dans le sens circonférentiel, et la rainure (102, 110) est constituée d'une rainure radiale qui s'étend vers un côté radialement extérieur depuis chaque partie en renfoncement.

6. Dispositif antivibrations étanche aux liquides selon la revendication 5, dans lequel la partie de prise en sandwich est constituée d'une première partie de prise en sandwich (64) sur un côté radialement extérieur et d'une deuxième partie de prise en sandwich (66) sur un côté radialement intérieur, une partie de prise en sandwich (68) à compression élevée qui prend en sandwich la paroi élastique dans le sens axial avec un taux de compression plus élevé que la deuxième partie de prise en sandwich est formée sur la première partie de prise en sandwich, et la partie en renfoncement est formée dans la partie de paroi élastique prise en sandwich par la partie de prise en sandwich à compression élevée.
